# EUROPEAN PATENT APPLICATION

(11) **EP 4 841 518 A1**
(43) Date of publication of application: **18.11.2026**
(21) Application number: 26174211.8
(22) Date of filing: 23.04.2026
(51) Int. Cl.: G06N 5/022, G06N 3/0475, G06N 5/02, G06N 20/10

(54) **GRAPH CLASSIFICATION**

(30) Priority: 16.05.2025 IN 202511047410
(71) Applicant: FUJITSU LIMITED, Kawasaki-shi, Kanagawa 211-8588 (JP)
(72) Inventor: RAMESH, Aditya, 560103 Bengaluru East (IN); SAIBEWAR, Aditya, 560103 Bengaluru East (IN); BHARDWAJ, Shivam, 560103 Bangaluru East (IN); KAUL, Manohar, 560103 Bengaluru East (IN)
(74) Representative: Haseltine Lake Kempner LLP

(57) **Abstract**

A computer-implemented method comprising: performing a signature generation process to generate a signature based on a target knowledge graph, KG, the signature generation process including determining the target KG's graph Laplacian, determining eigenvalues of the graph Laplacian, determining gaps between the eigenvalues, determining an importance score for each edge in the target KG based on the graph Laplacian, and generating the signature as an array of values based on the gaps between the eigenvalues and the importance scores; using a machine learning, ML, classifier, classifying, based on the signature, the target KG as adversarial or clean, wherein the ML classifier has been trained according to a training process including: training the ML classifier to correctly classify training KGs as adversarial or clean based on the corresponding training signatures.

## Description

The present invention relates to graph classification, and in particular to a computer-implemented method, a computer program, and an information programming apparatus.

AI (artificial intelligence) safety research focuses on ensuring that AI systems are developed and deployed in ways that are safe, beneficial, and aligned with human values. Some key areas of study include:
- Alignment: Developing methods to ensure AI systems behave in ways that are aligned with human intentions and values.
- Robustness: Creating AI systems that perform reliably and predictably across a wide range of situations.
- Interpretability: Making AI systems more understandable, allowing humans to better comprehend the decision-making processes of the AI systems.
- Value learning: Enabling AI systems to accurately infer and act in accordance with human preferences and ethical principles.
- AI governance: Exploring policy and regulatory frameworks to guide responsible AI development and deployment.

KG-RAG: Knowledge Graph-Retrieval Augmented Generation (RAG) combines information retrieval with generative models to enhance response accuracy. Knowledge Graphs (KG) augment RAG by providing structured, semantically rich data, enabling precise and contextually grounded responses for complex queries.

There is a risk that an adversary may modify KGs used in KG-RAG, or modify the documents upon which the KG-RAG is based. Either case may lead to incorrect information being provided by the KG-RAG system.

In light of the above, improved graph classification is desirable.

The present invention is defined by the independent claims, to which reference should now be made. Specific embodiments are defined in the dependent claims.

There is disclosed herein a computer-implemented method comprising performing a signature generation process to generate a signature based on a target knowledge graph, KG, the signature generation process comprising determining the target KG's graph Laplacian, determining eigenvalues of the graph Laplacian, determining gaps between the eigenvalues, determining an importance score for each edge in the target KG based on the graph Laplacian, and generating the signature as an array of values based on the gaps between the eigenvalues and the importance scores; using a machine learning, ML, classifier, classifying, based on the signature, the target KG as adversarial or clean, wherein the ML classifier has been trained according to a training process comprising: obtaining a plurality of training KGs (based on at least one document); performing graph perturbations on a subset of the plurality of training KGs to generate adversarial training KGs and selecting the remaining training KGs as clean training KGs; performing the signature generation process for the plurality of training KGs comprising the adversarial training KGs and the clean training KGs to generate a plurality of corresponding training signatures; and training the ML classifier to correctly classify the training KGs as adversarial or clean based on the corresponding training signatures.

There is also disclosed herein a computer-implemented method comprising: obtaining a plurality of training knowledge graphs, KGs (based on at least one document); performing graph perturbations on a subset of the plurality of training KGs to generate adversarial training KGs and selecting the remaining training KGs as clean training KGs; performing a signature generation process for the plurality of training KGs comprising the adversarial training KGs and the clean training KGs to generate a plurality of corresponding training signatures, wherein the signature generation process comprises, for each training KG, determining the training KG's graph Laplacian, determining eigenvalues of the graph Laplacian, determining gaps between the eigenvalues, determining an importance score for each edge in the training KG based on the graph Laplacian, and generating the signature as an array of values based on the gaps between the eigenvalues and the importance scores; and training the ML classifier to correctly classify the training KGs as adversarial or clean based on the corresponding training signatures.

Reference will now be made, by way of example, to the accompanying drawings, in which:
Figure 1 is a diagram useful for understanding KG-RAG;
Figure 2 is a diagram useful for understanding KG-RAG attacks;
Figure 3 is a diagram useful for understanding adversarial KGs;
Figure 4 is a diagram useful for understanding adversarial KGs;
Figure 5 is a flowchart illustrating a method;
Figure 6 is a flowchart illustrating a method;
Figure 7 is a flowchart illustrating a method;
Figure 8 is a diagram illustrating classification;
Figure 9 is a diagram illustrating KG perturbations;
Figure 10 is a diagram illustrating KG perturbations;
Figure 11 is a graph illustrating results of classification;
Figure 12 is a table of results;
Figure 13 is a table of results;
Figure 14 is a table of results; and
Figure 15 is a diagram illustrating an information processing apparatus.

As noted above, in a KG-RAG system there is a risk that an adversary may modify KGs used in KG-RAG, or modify the documents upon which the KG-RAG is based, which may lead to incorrect information being provided by the KG-RAG system.

This may be unsafe in particular applications of KG-RAG (e.g. providing medical information/diagnosis).

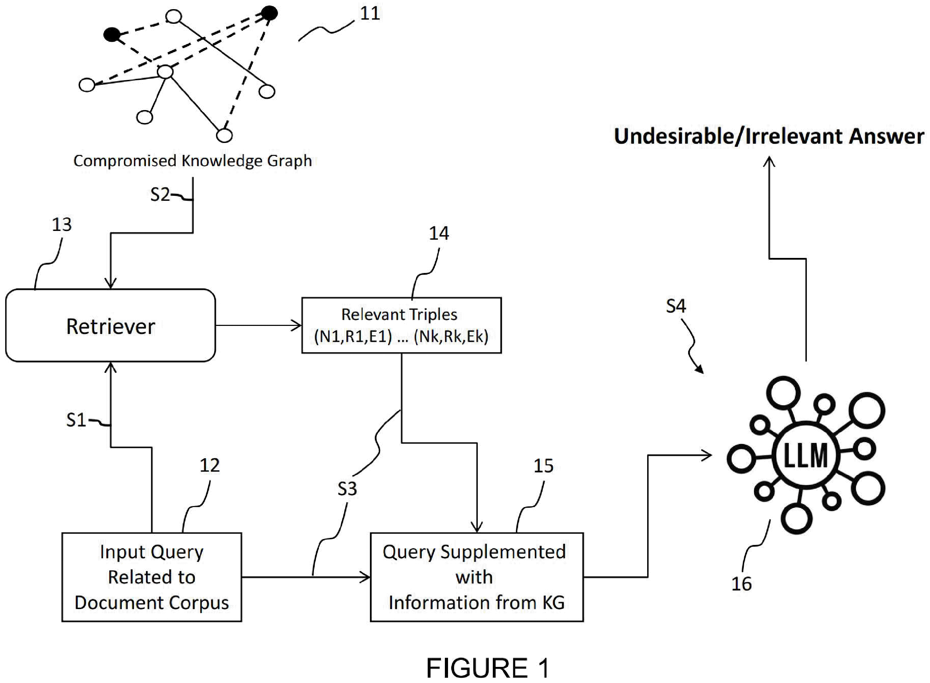

Figure 1 is a diagram illustrating how a compromised KG may lead to an undesirable and/or irrelevant answer in a KG-RAG system.

At step S1, an input query 12 is received and input to a retriever 13. The input query is related to a document corpus. At step S2, the retriever 13 retrieves relevant triples 14 from a KG 11 based on the query (a triple is way of expressing graph data and consists of three components: a subject, a predicate, and an object). At step S3, the query 12 is supplemented with information from the KG 15 to generate an augmented query 15 (that is, the augmented query 15 is generated based on the input query 12 and the relevant triples 14). In step S4, this query 15 is input to a large language model (LLM) 16, and the LLM generates an answer based on the query 15.

In the example shown in Figure 1, the KG 11 is a compromised KG. The black nodes and dashed-line edges are nodes and edges which have been added by an adversary. As a result, the answer generated by the LLM 16 is an undesirable and/or irrelevant answer. That is, the triples retrieved from the KG 11 were incorrect or "misleading" triples, in the sense that they contained incorrect information based on the perturbed KG 11, and this led to the undesirable and/or irrelevant answer generated by the LLM 16.

Whilst Figure 1 shows triples 14 being retrieved from the KG 11 by a retriever 13, a retriever may retrieve a KG from at least one document and the KG (e.g. the KG 11) may be used to augment an input query (e.g. without the intervening step of retrieving triples from a KG).

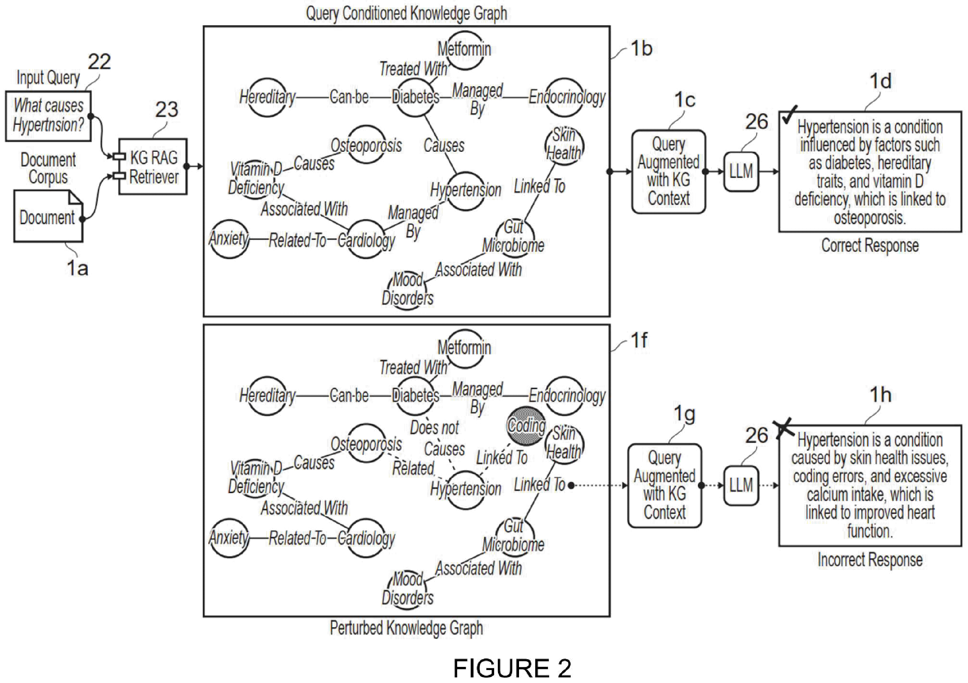

Figure 2 is a diagram illustrating how a perturbed KG may lead to an incorrect response. Figure 2 may be considered to illustrate the same principle as Figure 1 but in a more specific example, relating to medical data.

As shown in Figure 2, an input query 22 "What causes Hypertension?" is received. A KG-RAG retriever 13 extracts a KG 1b from at least one document 1a, based on the input query 22 and the document. The at least one document 1a includes a document with the following text:
*"Hypertension: A Multifactorial Condition and Its Interconnections*
*Causes and Contributing Factors: Hypertension can be influenced by various factors, including diabetes, which falls under the scope of endocrinology. Hereditary factors also play a significant role, along with vitamin D deficiency, which is commonly associated with osteoporosis. Additionally, emerging research suggests that the gut microbiome has implications for both hypertension and overall skin health.*
*Associated Health Risks: Hypertension is closely linked to cardiology due to its strong correlation with an increased risk of heart disease. it is also associated with mood disorders such as anxiety, highlighting the connection between blood pressure regulation and mental health.*
*Management and Treatment Approaches: Effective hypertension management includes a combination of medications, such as Metformin, along with lifestyle modifications. Stress management, regular physical activity, and a balanced diet play crucial roles in controlling blood pressure. In some cases, specialized medical interventions are necessary, emphasizing the need for a multidisciplinary approach to treatment."*

The KG 1b may be referred to as a query conditioned KG 1b. The KG 1b comprises nodes corresponding to entities and edges corresponding to relations between the entities. An augmented query 1c (query augmented with KG content) is generated based on the input query 22 and the KG 1b. The augmented query 1c is fed to an LLM 26 which generated a response 1d ("Hypertension is a condition influenced by factors such as diabetes, hereditary traits, and vitamin D deficiency, which is linked to osteoporosis."), which is a correct response.

In contrast, when the KG 1b is perturbed to generate a perturbed KG 1f, e.g. by an adversary, an incorrect response 1h is generated.

The perturbed KG 1f has had a node, "coding", added thereto, and an edge added from the "coding" node to the "hypertension" node with the relation "linked to"; the edge between "diabetes" and "hypertension" removed and replaced with an edge including the relation "does not causes"; and an edge added between "hypertension" and "osteoporosis" including the relation "related".

An augmented query 1g is generated based on the input query 22 and the perturbed KG 1f, and is fed to the LLM 26, which then generates the incorrect response 1h ("Hypertension is a condition caused by skin health issues, coding errors, and excessive calcium intake, which is linked to improved heart function.").

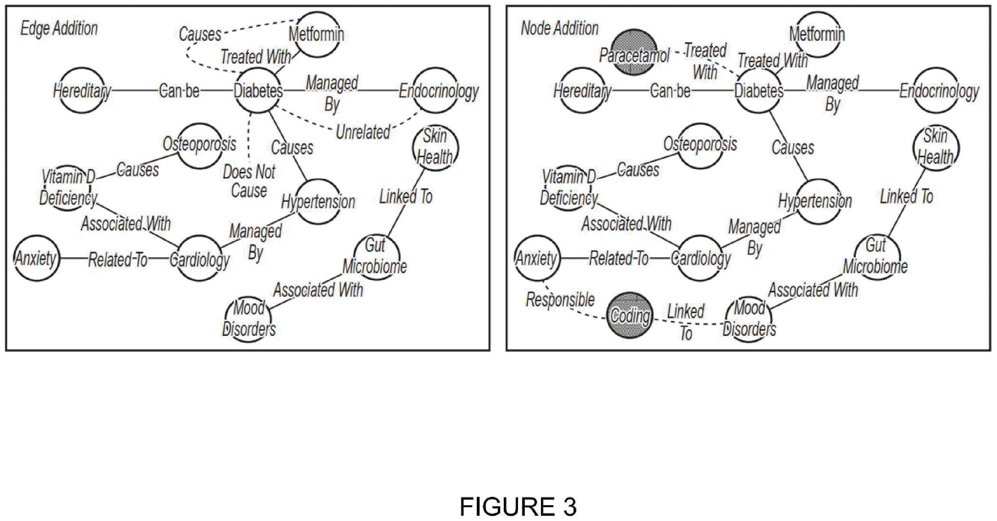

Figure 3 is a diagram illustrating ways in which the KG 1b in Figure 2 may be perturbed e.g. by an adversary seeking to undermine a KG-RAG system. The KG under "Edge Addition" shows with dashed lines edges that have been added compared to the KG 1b in Figure 2 - that is, edges have been added between the nodes "diabetes" and "metformin"; diabetes" and "endocrinology"; and "diabetes" and "hypertension", with relations "causes", "unrelated", and "does not cause". The KG under "Node Addition" shows with black-fill circles nodes which have been added and with dashed lines edges which have been added, compared to the KG 1b in Figure 2 - that is, the nodes "paracetamol" and "coding" have been added, together with edges between "paracetamol" and "diabetes" with the relation "treated with"; between "coding" and "anxiety" with the relation "responsible"; and between "coding" and "mood disorders" with the relation "linked to".

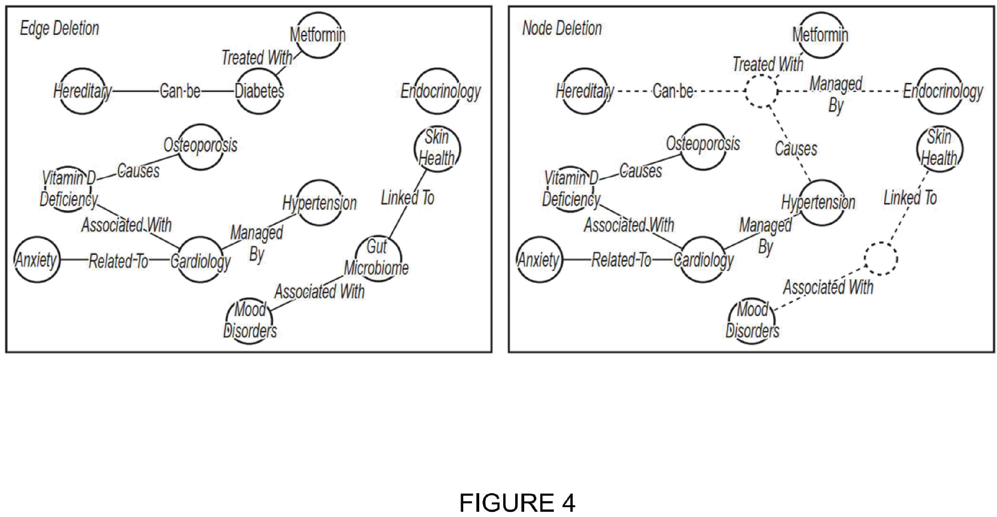

Figure 4 is a diagram illustrating ways in which the KG 1b in Figure 2 may be perturbed e.g. by an adversary seeking to undermine a KG-RAG system. The KG under "Edge Deletion" is a KG for which edges have been deleted compared to the KG 1b in Figure 2 - the edges between "diabetes" and "endocrinology" and between "diabetes" and "hypertension" have been deleted. The KG under "Node Deletion" shows with dashed-line circles nodes which have been deleted and with dashed lines edges which have been deleted. The nodes "diabetes" and "gut microbiome" and their associated edges have been deleted.

As indicated above, when an adversarial or compromised knowledge graph is provided as input to an LLM in a KG-RAG system, it introduces irrelevant or harmful context, leading to the generation of undesirable and potentially harmful responses. A compromised KG may be generated by direct perturbation of a KG or due to compromised information stored in a document corpus used by the KG-RAG system. No existing technologies are capable of specifically addressing this issue.

The methodology disclosed herein involves developing a graph signature to capture trends and connectivity patterns in a knowledge graph, enabling the flagging of adversarial documents and/or KGs.

More specifically, the disclosed methodology includes analyzing and classifying KGs by combining spectral graph theory and machine learning. A method corresponding to a particular implementation of the methodology begins by computing the Graph Laplacian of a KG and extracting its top-k eigenvalues and eigenvectors to capture structural changes in the graph. The method then measures the gaps between eigenvalues, which helps identify shifts in the graph's structure. Edge sensitivities are calculated to analyze connectivity patterns and are compressed using kernel mean embeddings for a more compact representation. Finally, these features are combined into a graph signature, which is used to train a classifier to distinguish between adversarial and clean KGs. This approach uniquely blends mathematical graph analysis with machine learning for KG classification.

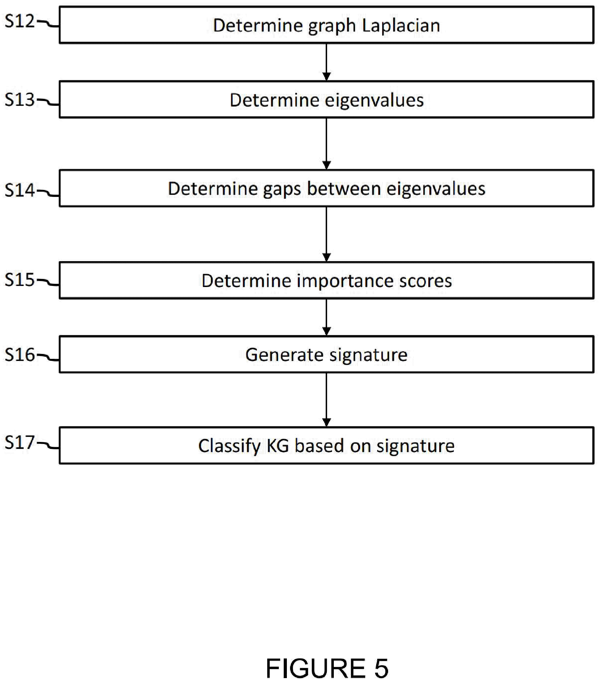

Figure 5 is a flowchart illustrating a method comprising steps S12-S17.

Step S12 comprises determining a graph Laplacian. That is, step S12 comprises determining a target knowledge graph's (KG's) graph Laplacian. Step S13 comprises determining eigenvalues. That is, step S13 comprises determining eigenvalues of the graph Laplacian. Step S14 comprises determining gaps between the eigenvalues. Step S15 comprises determining importance scores. That is, step S15 comprises determining an importance score for each edge in the target KG based on the graph Laplacian. Step S16 comprises generating a signature. That is, step S16 comprises generating the signature as an array of values based on the gaps between the eigenvalues and the importance scores.

Steps S12-S16 are together a signature generation process which is performed to generate the signature based on the target KG.

Step S17 comprises classifying the KG based on the signature. That is, step S17 comprises using a machine learning, ML, classifier, classifying, based on the signature, the target KG as adversarial or clean, wherein the ML classifier has been trained according to a training process comprising: obtaining a plurality of training KGs (based on at least one document); performing graph perturbations on a subset of the plurality of training KGs to generate adversarial training KGs and selecting the remaining training KGs as clean training KGs; performing the signature generation process for the plurality of training KGs comprising the adversarial training KGs and the clean training KGs to generate a plurality of corresponding training signatures; and training the ML classifier to correctly classify the training KGs as adversarial or clean based on the corresponding training signatures.

In line with Figure 5, according to an embodiment of a first aspect there is disclosed herein a computer-implemented method comprising: performing a signature generation process to generate a signature based on a target knowledge graph, KG, the signature generation process including determining the target KG's graph Laplacian, determining eigenvalues of the graph Laplacian, determining gaps between the eigenvalues, determining an importance score for each edge in the target KG based on the graph Laplacian, and generating the signature as an array of values based on the gaps between the eigenvalues and the importance scores; and using a machine learning, ML, classifier, classifying, based on the signature, the target KG as adversarial or clean, wherein the ML classifier has been trained according to a training process including: obtaining a plurality of training KGs (based on at least one document); performing graph perturbations on a subset of the plurality of training KGs to generate adversarial training KGs and selecting the remaining training KGs as clean training KGs; performing the signature generation process for the plurality of training KGs including the adversarial training KGs and the clean training KGs to generate a plurality of corresponding training signatures; and training the ML classifier to correctly classify the training KGs as adversarial or clean based on the corresponding training signatures.

The target KG may be a KG generated as part of a KG-retrieval augmented generation, KG-RAG, process.

The computer-implemented method may comprise, when the target KG is classified as a clean KG, continuing the KG-RAG process based on the target KG and when the target KG is classified as an adversarial KG, restarting the KG-RAG process to generate a new KG.

The computer-implemented method may comprise: receiving a query; based on the query, retrieving information from at least one document; generating the target KG based on the retrieved information; when the target KG is classified as a clean KG, generating, based on the query and the target KG and using a large language model, LLM, a response to the query.

The computer-implemented method may comprise, when the target KG is classified as an adversarial KG, repeating the steps of information retrieval and KG generation.

The at least one document in the KG-RAG process may be the same as the at least one document used in the training process.

The computer-implemented method may comprise, before classifying the target KG, performing the training process.

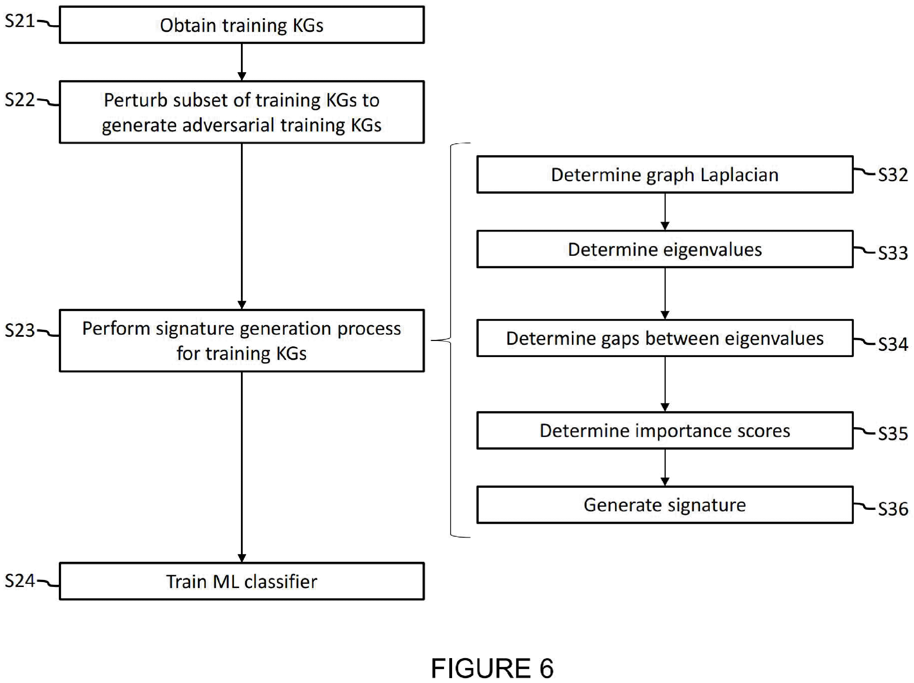

Figure 6 is a flowchart illustrating a method comprising steps S21-S24.

Step S21 comprises obtaining training KGs. That is, step S21 comprises obtaining a plurality of training knowledge graphs, KGs (based on at least one document).

Step S22 comprises perturbing a subset of the training KGs to generate adversarial training KGs. That is, step S22 comprises performing graph perturbations on a subset of the plurality of training KGs to generate adversarial training KGs and selecting the remaining training KGs as clean training KGs.

Step S23 comprises performing a signature generation process for the training KGs. That is, step S23 comprises performing a signature generation process for the plurality of training KGs comprising the adversarial training KGs and the clean training KGs to generate a plurality of corresponding training signatures. Step S23 comprises steps S32-S36.

Step S32 comprises determining a graph Laplacian. That is, step S32 comprises determining the training KG's graph Laplacian. Step S33 comprises determining eigenvalues. That is, step S33 comprises determining eigenvalues of the graph Laplacian. Step S34 comprises determining gaps between the eigenvalues. Step S35 comprises determining importance scores. That is, step S35 comprises determining an importance score for each edge in the training KG based on the graph Laplacian. Step S36 comprises generating the signature. That is, step S36 comprises generating the signature as an array of values based on the gaps between the eigenvalues and the importance scores.

Step S24 comprises training the ML classifier. That is, step S24 comprises training the ML classifier to correctly classify the training KGs as adversarial or clean based on the corresponding training signatures.

In line with Figure 6, according to an embodiment of a second aspect there is disclosed herein a computer-implemented method comprising: performing a training process comprising: obtaining a plurality of training knowledge graphs, KGs (based on at least one document); performing graph perturbations on a subset of the plurality of training KGs to generate adversarial training KGs and selecting the remaining training KGs as clean training KGs; performing a signature generation process for the plurality of training KGs including the adversarial training KGs and the clean training KGs to generate a plurality of corresponding training signatures, wherein the signature generation process comprises, for each training KG determining the training KG's graph Laplacian, determining eigenvalues of the graph Laplacian, determining gaps between the eigenvalues, determining an importance score for each edge in the training KG based on the graph Laplacian, and generating the signature as an array of values based on the gaps between the eigenvalues and the importance scores; and training the ML classifier to correctly classify the training KGs as adversarial or clean based on the corresponding training signatures.

Considering the Figure 6 method, the computer-implemented method may comprise: performing the signature generation process to generate a signature based on a target KG; using the ML classifier, classifying, based on the signature, the target KG as adversarial or clean.

Considering the method of Figure 5 and/or the method of Figure 6:
The target KG may comprise nodes representing entities and edges representing relations between the entities.

Determining the graph Laplacian may comprise computing an adjacency matrix and a degree matrix based on the KG.

Computing the adjacency matrix may comprise computing node embeddings of the nodes of the KG and computing relation embeddings of the edges of the KG.

Computing the adjacency matrix may comprise computing each element of the KG which corresponds to a pair of connected nodes in the KG based on the node embeddings of the pair of nodes and the relation embedding of the edge between the pair of nodes.

Determining the graph Laplacian may comprise computing an adjacency matrix and a degree matrix based on the KG, computing the adjacency matrix may comprise computing node embeddings of the nodes of the KG and computing relation embeddings of the edges of the KG, and computing the adjacency matrix may comprise computing each element of the KG which corresponds to a pair of connected nodes in the KG based on the node embeddings of the pair of nodes and the relation embedding of the edge between the pair of nodes.

Each element of the adjacency matrix which corresponds to a pair of connected nodes in the KG may be based on similarity between the node embeddings of the pair of nodes.

Each element of the adjacency matrix which corresponds to a pair of nodes which are not connected may be zero.

Determining the graph Laplacian may comprise computing a symmetric adjacency matrix based on the adjacency matrix and computing the graph Laplacian by subtracting the symmetric adjacency matrix from the degree matrix.

Computing the degree matrix may comprise using a Harr-Laplacian formulation to incorporate node embeddings into the degree matrix.

Determining the importance scores may comprise, for each edge: removing the edge and determining modified eigenvalues based on the graph Laplacian; and computing a difference between the eigenvalues and the modified eigenvalues.

Determining modified eigenvalues based on the graph Laplacian may comprise using first-order perturbation theory.

Computing the difference between the eigenvalues and the modified eigenvalues may comprise computing differences between the respective eigenvalues and the respective modified eigenvalues to generate a vector of eigenvalue differences and determining the importance scores may comprise, for each edge, computing a magnitude of the vector of eigenvalue differences.

Generating the signature as the array of values may comprise compressing the importance scores of the edges of the KG using kernel mean embedding.

Generating the signature as the array of values may comprise including in the array of values the eigenvalue gaps, a norm of the eigenvalue gaps, and the importance scores.

Generating the signature as the array of values may comprise including in the array of values the eigenvalue gaps, the 1-norm of the eigenvalue gaps, the 2-norm of the eigenvalue gaps, and the importance scores.

Considering the Figure 6 method:
Performing a graph perturbation on a training KG may comprise any of: adding at least one node; removing at least one node; adding at least one edge; and removing at least one edge.

Performing the graph perturbations may comprise performing the signature generation process to generate signatures for the subset of training KGs to be perturbed and determining which nodes and/or edges to perturb based on the signatures.

The computer-implemented method may comprise selecting edges having the highest importance scores and/or nodes connected by those edges as the nodes and/or edges to perturb.

Each training KG may be associated with a ground truth label indicating whether it is an adversarial training KG or a clean training KG and training the ML classifier to correctly classify the training KGs may comprise using the ML classifier to classify each of the training KGs as adversarial or clean and adjusting weights of the ML classifier based on the classifications and based on the ground truth labels.

According to an embodiment of a third aspect there is disclosed herein a computer program which, when run on a computer, causes the computer to carry out a method comprising: performing a signature generation process to generate a signature based on a target knowledge graph, KG, the signature generation process including determining the target KG's graph Laplacian, determining eigenvalues of the graph Laplacian, determining gaps between the eigenvalues, determining an importance score for each edge in the target KG based on the graph Laplacian, and generating the signature as an array of values based on the gaps between the eigenvalues and the importance scores; using a machine learning, ML, classifier, classifying, based on the signature, the target KG as adversarial or clean, wherein the ML classifier has been trained according to a training process including: obtaining a plurality of training KGs (based on at least one document); performing graph perturbations on a subset of the plurality of training KGs to generate adversarial training KGs and selecting the remaining training KGs as clean training KGs; performing the signature generation process for the plurality of training KGs including the adversarial training KGs and the clean training KGs to generate a plurality of corresponding training signatures; and training the ML classifier to correctly classify the training KGs as adversarial or clean based on the corresponding training signatures.

According to an embodiment of a fourth aspect there is disclosed herein a computer program which, when run on a computer, causes the computer to carry out a method comprising performing a training process comprising: obtaining a plurality of training knowledge graphs, KGs (based on at least one document); performing graph perturbations on a subset of the plurality of training KGs to generate adversarial training KGs and selecting the remaining training KGs as clean training KGs; performing a signature generation process for the plurality of training KGs including the adversarial training KGs and the clean training KGs to generate a plurality of corresponding training signatures, wherein the signature generation process comprises, for each training KG determining the training KG's graph Laplacian, determining eigenvalues of the graph Laplacian, determining gaps between the eigenvalues, determining an importance score for each edge in the training KG based on the graph Laplacian, and generating the signature as an array of values based on the gaps between the eigenvalues and the importance scores; and training the ML classifier to correctly classify the training KGs as adversarial or clean based on the corresponding training signatures.

According to an embodiment of a fifth aspect there is disclosed herein an information processing apparatus comprising a memory and a processor connected to the memory, wherein the processor is configured to: perform a signature generation process to generate a signature based on a target knowledge graph, KG, the signature generation process including determining the target KG's graph Laplacian, determining eigenvalues of the graph Laplacian, determining gaps between the eigenvalues, determining an importance score for each edge in the target KG based on the graph Laplacian, and generating the signature as an array of values based on the gaps between the eigenvalues and the importance scores; using a machine learning, ML, classifier, classify, based on the signature, the target KG as adversarial or clean, wherein the ML classifier has been trained according to a training process including: obtaining a plurality of training KGs (based on at least one document); performing graph perturbations on a subset of the plurality of training KGs to generate adversarial training KGs and selecting the remaining training KGs as clean training KGs; performing the signature generation process for the plurality of training KGs including the adversarial training KGs and the clean training KGs to generate a plurality of corresponding training signatures; and training the ML classifier to correctly classify the training KGs as adversarial or clean based on the corresponding training signatures.

According to an embodiment of a sixth aspect there is disclosed herein an information processing apparatus comprising a memory and a processor connected to the memory, wherein the processor is configured to: perform a training process comprising: obtaining a plurality of training knowledge graphs, KGs (based on at least one document); performing graph perturbations on a subset of the plurality of training KGs to generate adversarial training KGs and selecting the remaining training KGs as clean training KGs; performing a signature generation process for the plurality of training KGs including the adversarial training KGs and the clean training KGs to generate a plurality of corresponding training signatures, wherein the signature generation process comprises, for each training KG determining the training KG's graph Laplacian, determining eigenvalues of the graph Laplacian, determining gaps between the eigenvalues, determining an importance score for each edge in the training KG based on the graph Laplacian, and generating the signature as an array of values based on the gaps between the eigenvalues and the importance scores; and training the ML classifier to correctly classify the training KGs as adversarial or clean based on the corresponding training signatures.

Features relating to any aspect/embodiment may be applied to any other aspect/embodiment.

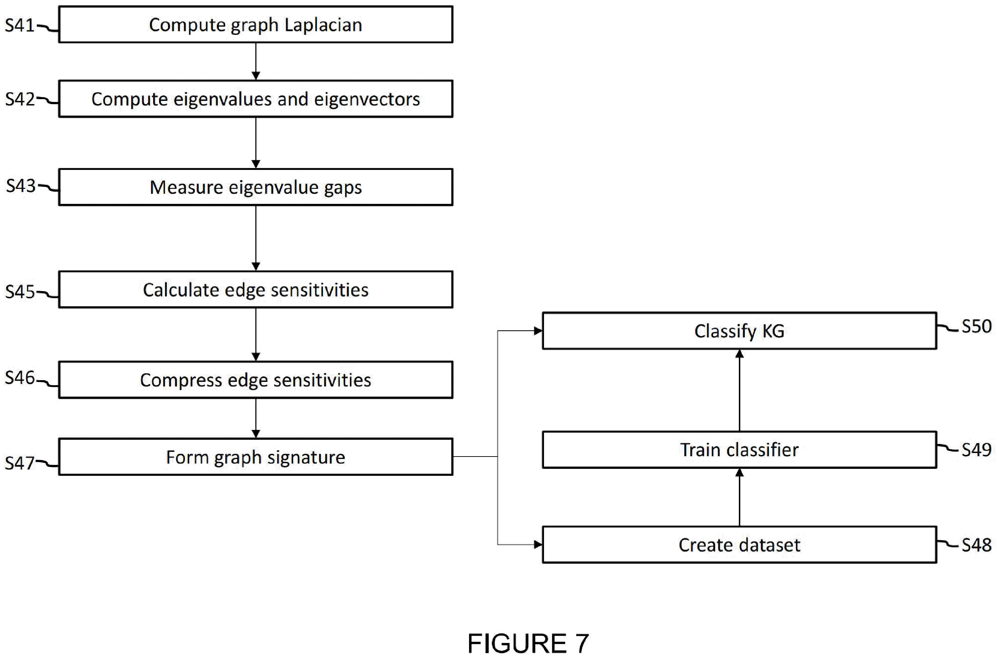

Figure 7 is a flowchart illustrating a method comprising steps S41-S50.

Step S41 comprises computing the graph Laplacian of a KG. The graph Laplacian is computed by steps i-iv below:

### Step i: Compute the Adjacency Matrix

An adjacency matrix A is a way to capture the connections in the Knowledge Graph. The (i,j)-th element of the adjacency matrix captures both the connectivity between the ith node and the jth node and the strength of the connection between the ith and jth nodes. The strength of the connection between ith and jth nodes is computed using node embeddings of the ith node and the jth node and the relation embedding of the relation between them. In some implementations each element of the adjacency matrix involves cosine similarity of the node embeddings concerned.

For example, in an implementation each element of the adjacency matrix is computed according to the equation below: $w \left(u, v\right) = σ \left({\left({u}^{f}\right)}^{T}\left({v}^{f}+{R}_{uv}^{f}\right)\right)$ where w(u,v) is the element of the adjacency matrix corresponding to the nodes u and v, u^{f} and v^{f} are the node embeddings of the nodes u and v, ${R}_{uv}^{f}$ is the relation embedding of the relation between the nodes u and v, and σ is a coefficient.

The node embeddings may be generated using any suitable embedding model, e.g. any suitable feature extractor model or transformer model. For instance, the embedding models used in LLMs such as ChatGPT or Llama may be used. Each node embedding is generally an array/vector of values. Each element of the adjacency matrix is a value. The (i,j)-th element of the adjacency matrix is zero if there is no relation between the ith node and jth node.

### Step ii: Compute the Symmetric Adjacency Matrix A'

The Harr-Laplacian formulation (Badea et. al., Haar-Laplacian for directed graphs, 2024) is used in generating the Laplacian in this implementation. This involves generating a symmetric adjacency matrix A' based on the adjacency matrix A computed in step i, as shown below. Symmetric Matrices have useful mathematical properties. ${A}_{s} = 0.5 * \left(A+{A}^{T}\right) ,$ ${A}_{a} = 0.5 * \left(A-{A}^{T}\right) ,$ and $A ′ = {A}_{s} + {iA}_{a} ,$

### Step iii: Compute the degree matrix D

The degree matrix D is a diagonal matrix that captures the density of connection of each node. Generally, computing the degree matrix for a graph involves counting the number of nodes each node is connected to. In this case, following the Harr-Laplacian formulation, the degree matrix is computed as follows. $D = diag \left(\left|A′\right|1\right) ,$ where |A'| denotes the element-wise absolute value and **1** is the vector with every entry equal to 1.

### Step iv: Compute the Laplacian of the Knowledge Graph

$L = D - A ′ .$

The computation of the graph Laplacian may be thought of as transforming the KG into a mathematical form that captures its connectivity.

Step S42 comprises computing eigenvalues and eigenvectors of the graph Laplacian, e.g. the top-k eigenvalues and eigenvectors, where k is an integer greater than 1. The eigenvalues and eigenvectors may be thought of as special numbers and directions that highlight the important features of the KG's structure. It will be appreciated that eigenvalue and eigenvector computation based on a graph Laplacian is a well-known problem and may be addressed with various techniques, e.g. an eigenvalue decomposition model available in coding libraries. It will be appreciated that the eigenvectors themselves are not strictly required for generation of the signature, but their computation is usually required in the computation of eigenvalues. Thus any mention herein of computing eigenvectors and eigenvalues may be considered the computation of eigenvalues accompanied by the computation of eigenvectors when necessary for computing the eigenvalues.

Step S43 comprises measuring the eigenvalue gaps. This is done by finding the difference between consecutive eigenvalues.

Step S45 comprises calculating edge sensitivities for the edges in the KG. The edge sensitivities indicate how important each edge is for the overall KG, that is, edge sensitivities are a measure of importance of edges. An edge sensitivity, or "importance" e.g. between zero and one is assigned to each edge. This step comprises, for each edge in turn, removing the edge and re-computing the eigenvalues (based on the Laplacian), and computing the difference between the original eigenvalues and the modified eigenvalues. Normalization is used to obtain an edge sensitivity between zero and one for each edge.

To re-compute the eigenvalues in each case (i.e. each time an edge is removed), first-order perturbation theory is used to compute a modified graph Laplacian and the eigenvalues are re-computed based on the modified graph Laplacian to obtain the modified eigenvalues. That is, when the edge between the ith and jth nodes is removed from the KG, the connection between these nodes is severed. Using first-order perturbation theory (including computing a perturbation matrix), the change in the original Graph Laplacian due to this edge removal can be computed efficiently. This approach eliminates the need to recompute the entire Graph Laplacian of a modified KG with the edge concerned removed.

The change in eigenvalues is computed, in respect of each edge (i.e. in respect of each edge's removal), by computing the change in respective eigenvalues to generate a vector and then computing the magnitude of the vector. That is, if the original eigenvalues comprise eigenvalues e1, e2, ..., ek and the modified eigenvalues comprise eigenvalues e'1, e'2, ..., e'k, then the change in eigenvalues is computed as the magnitude of the vector {e1-e'1, e2-e'2, ... ek-e'k}.

The edge-sensitivities may be thought of as the effect on the overall KG when an edge is perturbed, and computing them is a way of analyzing connectivity patterns in the KG.

Step S46 comprises compressing the edge sensitivities by using a kernel embedding (or kernel mean embedding). This compresses the edge sensitivities into a compact representation.

Step S47 comprises forming the graph signature. This step comprises combining features into a single representation to form the KG's signature. The graph signature is thus an array of values - a fixed dimensional representation of the KG agnostic of the size of the KG. In an implementation, the signature comprises the spectral gaps (the eigenvalue gaps based on the original graph Laplacian), spectral norms (1-norm and 2-norm of a vector of the spectral gaps), and the kernel embedding. The 1-norm and 2-norm of the vector of the spectral gaps may be understood as follows. The spectral gaps (the eigenvalue gaps based on the original graph Laplacian) are provided as values of a vector g. The spectral norms are then the 1-norm of the vector g (sum of magnitude of values of the vector g - i.e. the sum of the magnitude of the eigenvalue gaps) and the 2-norm of the vector g (the Euclidean norm, that is, the square root of the sum of the squared values of the vector g - i.e. square root of the sum of the squared eigenvalue gaps).

Assuming that the steps S41-S47 are performed based on a target KG, the next step is step S50 which comprises classifying the target KG as clean or adversarial using a trained classifier.

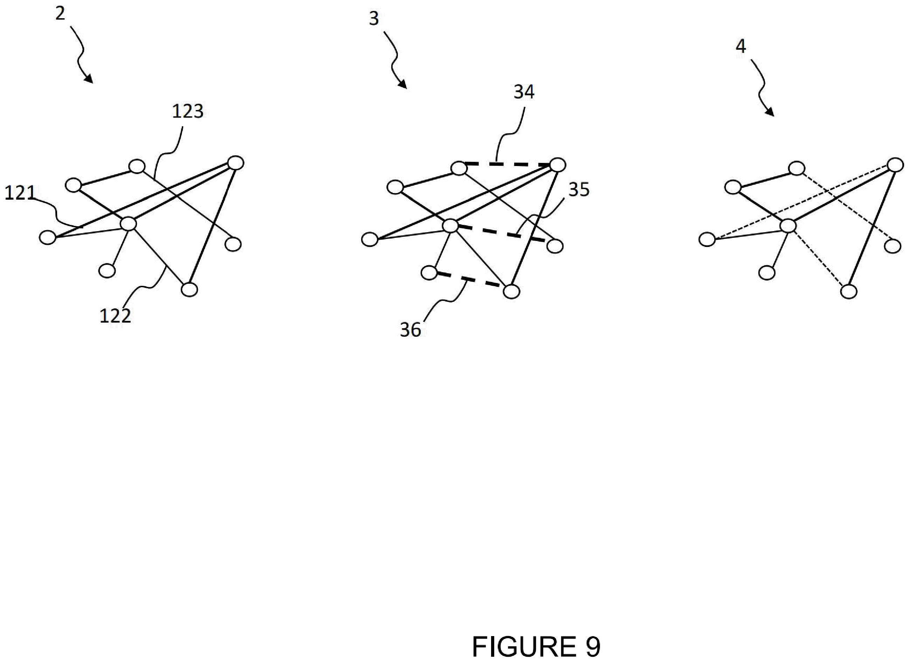

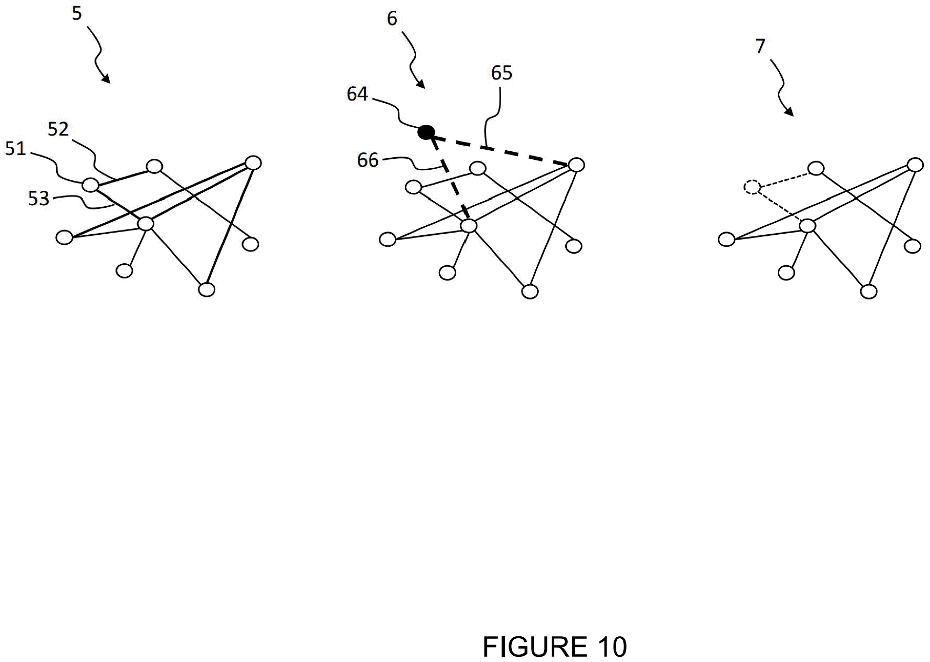

Assuming instead that the steps S41-S47 are performed based on a training KG, the next step is step S48, followed by step S49. Step S48 comprises creating a dataset of training signatures. That is, a plurality of training KGs are obtained and a subset thereof are perturbed (using edge and/or node addition and/or deletion, e.g. as shown with respect to Figures 3 and 4, and with respect to Figures 9 and 10, described below) to generate adversarial training KGs and the remaining training KGs are then considered clean training KGs. Steps S41-S47 are performed for each training KG, and thus the dataset of training signatures is created, each associated with a ground truth label (clean or adversarial, based on the corresponding training KG). Step S49 comprises training the classifier based on the training signatures and their ground truth labels.

The computation of a graph signature Sig_{Gq} (i.e. the steps S41-S47) comprises, in an implementation, the following steps a-f.
a: Compute the Laplacian L_{q} of KG G_{q}
b: Extract top-k eigenvalues ${\left\{{λ}_{i}\right\}}_{i = 1}^{k}$ and spectral gaps *gᵢ* = *λᵢ* - *λ*_{*i+*1}
c: Compute spectral norms ∥*g*∥₁, ∥*g*∥₂
d: Compute edge sensitivities *P* = {Δ*λᵢ*(*e*)|*e* ∈ ε*_{q}, i* ∈ [1, *k*]} for the edges e ∈ ε*_{q}*
e: Compute kernel embedding *ϕ*(*P*)
f: Return *Sig_{Gq}* = [*g*₁, ..., *g*_{*k-*1}*,* ∥*g*∥₁, ∥*g*∥₂, *ϕ*(*P*)]

Steps S41-S47 may be considered a signature generation process. The training of the classifier may be considered a training process. The classifier is a binary classifier. The classifier is a machine learning (ML) classifier, e.g. a support vector machine (SVM). An SVM may be trained using convex optimization techniques with Hinge loss as the loss function.

It will be appreciated that the generation of the signature for a given KG may be considered a form of Spectral Analysis - in the sense that the signature generation process converts a KG into a fixed-dimensional representation by analyzing its structure. The graph Laplacian's eigenvalues and eigenvectors capture connectivity patterns.

The training KGs may be obtained from a standard dataset for evaluating RAG systems. The adversarial training KGs may be generated by randomly adding and/or deleting nodes and/or edges, e.g. using a program. In some implementations, training KGs may be perturbed based on the corresponding graph signature - that is, to determine the nodes and/or edges whose removal/modification would cause the largest effect in the KG (for instance, the edge with the highest edge sensitivity and/or any associated nodes).

The Figure 7 method may be implemented as part of a KG-RAG system. That is, in such an implementation the target KG is generated based on an input query and at least one document. If the target KG is classified as clean, the normal KG-RAG process continues and a response is generated by an LLM based on the query and the target KG (for instance, an augmented query is generated by augmenting the original query with context based on the target KG, and this is input to the LLM to obtain the response). If the target KG is classified as adversarial, the normal KG-RAG process may restart and a new target KG may be generated. An alert may be generated when a threshold number or proportion of KGs are classified as adversarial in a particular time period, as this may be a sign that at least one document upon which the KG-RAG process is based is compromised/corrupted.

Step S41 may be considered to correspond to step S12 and/or step S32 and corresponding description may apply and vice versa. Similarly, step S42 may be considered to correspond to step S13 and/or step S33, step S43 to step S14 and/or step S34, step S45 to step S15 and/or step S35, steps S46 and S47 to step S16 and/or step S36, step S48 to steps S21 and S22 (and S23), step S49 to step S24, and step S50 to step S17, and corresponding description may apply and vice versa.

Edge sensitivities may be referred to as importance scores.

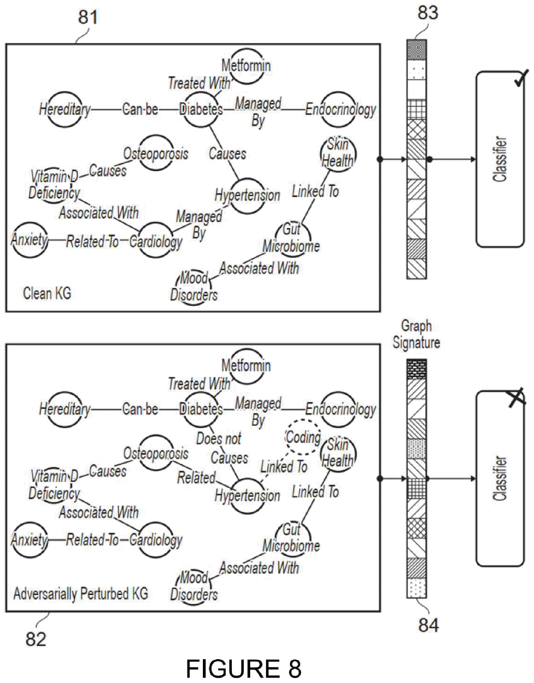

Figure 8 is a diagram illustrating an effect of the disclosed methodology, e.g. the Figures 5-7 methods.

Along the top of Figure 8, a clean KG 81 is generated and a signature 83 generated by performing the signature generation process described with respect to Figures 5-7. The classifier, which has been trained to classify KGs as adversarial or clean based on the corresponding signatures, successfully classifies the KG 81 as clean.

Along the bottom of Figure 8, a perturbed KG 82 is generated and a signature 84 is generated by performing the signature generation process described with respect to Figures 5-7. The classifier, which has been trained to classify KGs as adversarial or clean based on the corresponding signatures, successfully classifies the KG 83 as adversarial. Although patterns have been used to indicate the signatures 83 and 84, in general color may be used to indicate a graph signature. Each bar of pattern/color represents an element of the signature, e.g. a spectral gap, a spectral norm, or a compressed edge sensitivity.

Figures 9 and 10 illustrate way in which a training KG may be perturbed to generate an adversarial training KG.

Figure 9 shows a training KG 2. An adversarial training KG 3 is generated by adding edges 34, 35, and 36, illustrated with dashed lines. An adversarial training KG 4 is generated by removing edges 121, 122, and 123, illustrated with dotted lines in the adversarial training KG 4.

Figure 10 shows a training KG 5. An adversarial training KG 6 is generated by adding a node 64 and edges 65 and 66, illustrated with a black-filled circle and dashed lines. An adversarial training KG 7 is generated by removing the node 51 and the associated edges 52 and 53, illustrated with dotted lines in the adversarial training KG 7.

It will be appreciated that the techniques of node addition, node deletion, edge addition, and edge deletion may be used individually or together in any combination in the perturbation of a given training KG. Edge and/or node modification may be used, though this may be considered a node or edge removal followed by a node or edge addition.

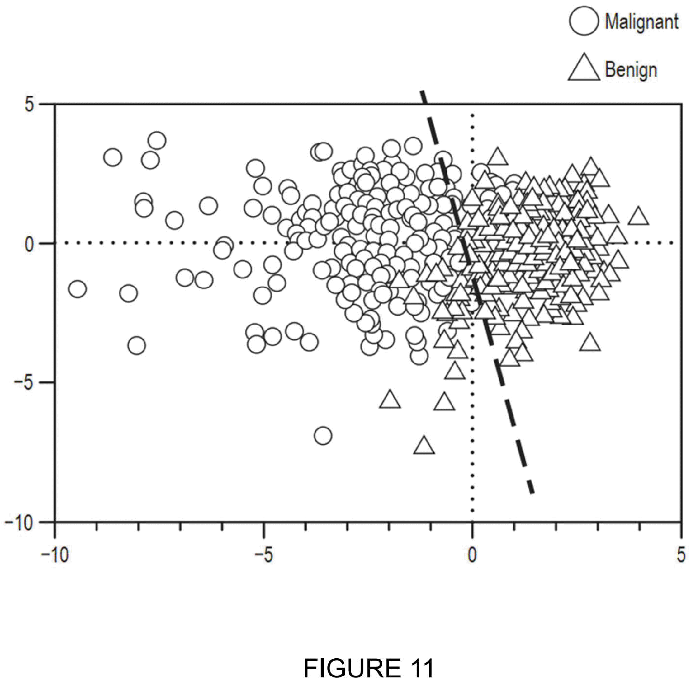

Figure 11 is a diagram showing a graph illustrating results of applying on test data a classifier trained according to the training process described above. The classes "malignant" and "benign" correspond to the classes "adversarial" and "clean". The dashed line shows a decision boundary of the classifier in terms of the quantities represented by the x and y axes. To generate this graph for visualization purposes, the dimensions of the graph signatures have been reduced to two dimensions, represented by the x and y axes.

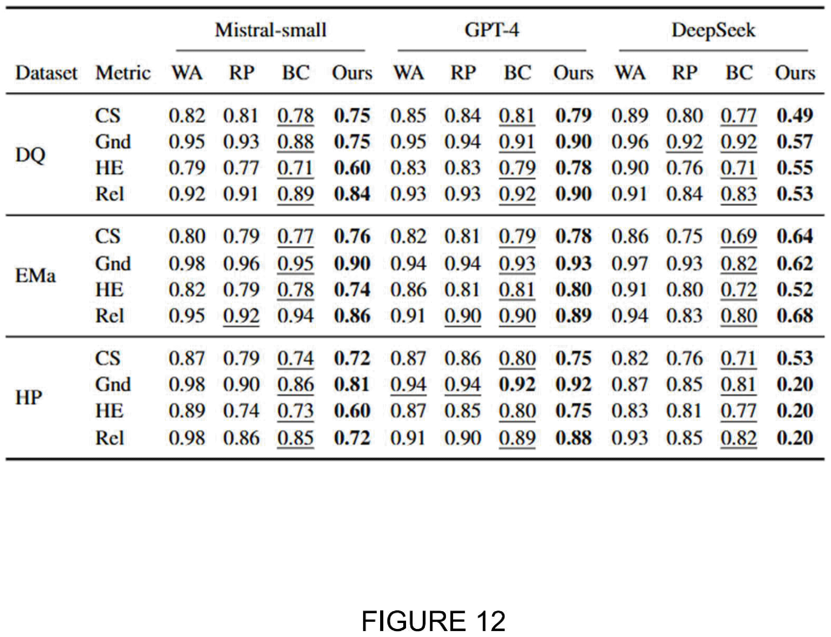

Figure 12 shows a table of results. In an experiment to generate these results, different attack methods were compared. That is, different methods of modifying KGs in a KG-RAG process were compared and the resulting answers provided by the KG-RAG process evaluated. Along the top the different KG-RAG methods used are shown: Mistral-small, GPT-4, and DeepSeek. Along the left-hand-side, the different datasets used are shown: DQ (DelucionQA), EMa (EManual), and HP (HotPotQA). The second column from the left-hand-side shows the different metrics used to evaluate the answers: CS (cosine similarity, which captures similarity in the embedding space between the generated response and a ground truth or "golden" response (i.e. a human-generated response)), Gnd (Groundedness which captures the hallucinations produced by the KG-RAG process), HE (human evaluation, which captures the usefulness of the KG-RAG response) and Rel (Relevance, which captures how appropriate the response is w.r.t to the original question). The second row from the top shows the different attack methods: WA (without attack - i.e. the normal KG-RAG process with no attack), RP (random perturbations - i.e. randomly selecting an edge to remove), BC (betweenness centrality), and "Ours" (determining which edge to remove by looking at the graph signature, i.e. removing the edge with the highest edge sensitivity). It will be appreciated from Figure 12 that the method "Ours" of using the graph signature to determine important edges to remove performs the best in the sense that the KG-RAG response is the most negatively affected by this attack.

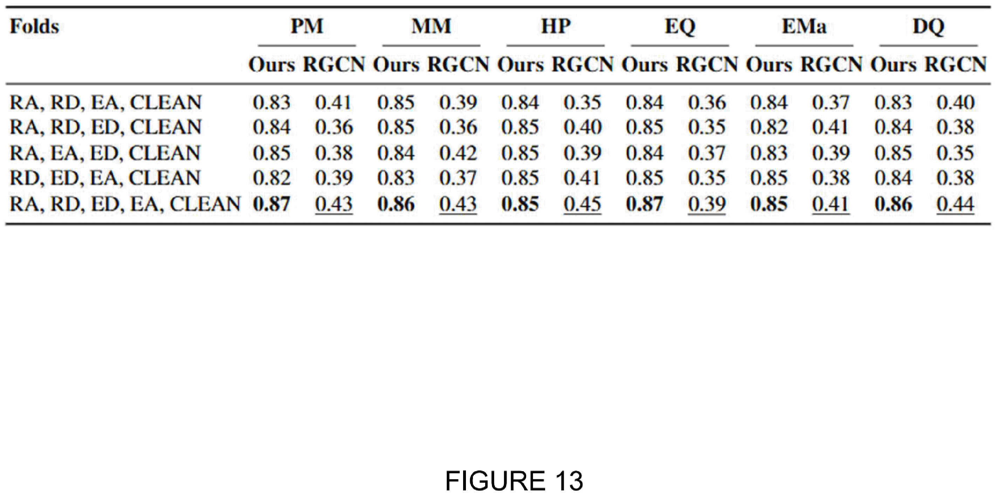

Figure 13 shows a table of results. In an experiment to generate these results, different methods for detecting adversarial perturbations to graphs were compared. Along the top the different datasets used are shown: PM (PubMed), MM (MSMarco), HP, EQ (ExpertQA), EMa, and DQ. The second row from the top shows the methods used for detecting adversarial perturbations: "Ours" (a method in line with that described with respect to Figure 7) and RGCN (relational graph convolutional network). On the left-hand-side is shown the perturbations that were performed: RA (relation addition), RD (relation deletion), EA (edge addition), ED (edge deletion), CLEAN (no perturbation).

For the RGCN method, an RGCN was used to generate a vector based on the KG concerned and the vector used to train an ML classifier which was then used to classify KGs as clean or adversarial based on the vector generated by the RGCN. For the other method, "Ours", a method in line with the Figure 7 method was used, e.g. computing the graph signature and using this to train an ML classifier to classify KGs as clean or adversarial based on the graph signature.

The results show the accuracy of the method. For example, it may be seen in the last row that the Figure 7 method had an accuracy of 0.87 in detecting perturbed KGs based on the PM dataset whilst the RGCN method had an accuracy of 0.43. It will be appreciated that the Figure 7 method outperforms the RGCN method in all datasets and for all the perturbations used.

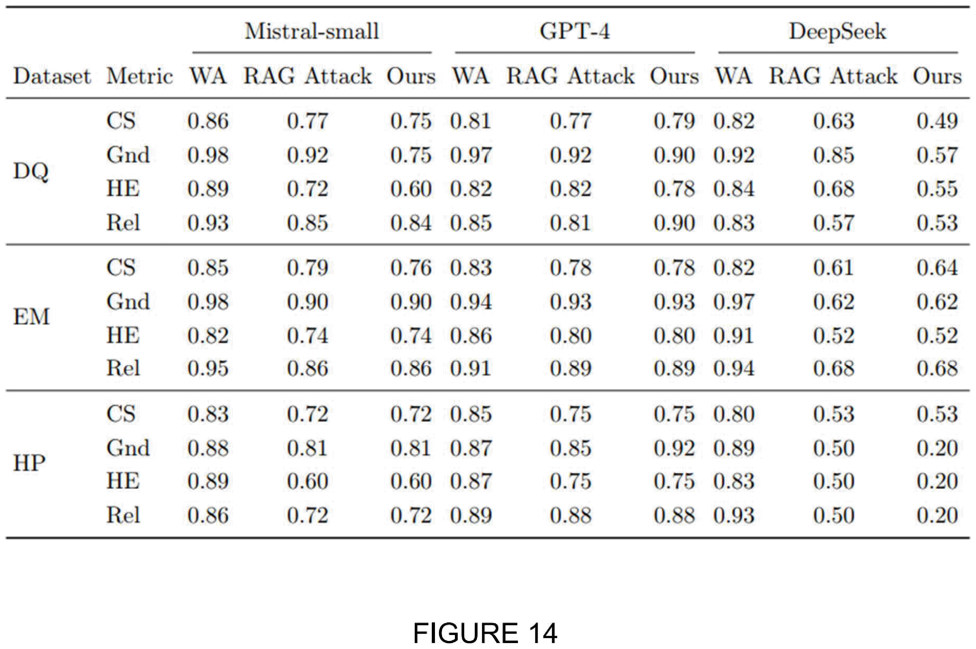

Figure 14 shows a table of results. In an experiment to generate these results, attacks on KG-RAG systems were compared with attacks on RAG systems (no knowledge graph involved) and with KG-RAG processes carried out with no attack. The second row from the top indicates the process and/or attack. WA means without attack - these columns show results for normal KG-RAG processes without attacks. RAG attack - these columns show results for RAG processes on which attacks have been carried out. In each case, the graph signature described above was used to determine the most important edges to be removed/perturbed, and an LLM was used to translate this change into a change in the document(s) and then a normal RAG process was carried out. Ours - these columns show results for KG-RAG processes in which an attack has been carried out by determining the most important edges based on the graph signature. The "ours" columns show the same results as the "ours" columns in Figure 12.

Along the top the different KG-RAG methods used are shown: Mistral-small, GPT-4, and DeepSeek. Along the left-hand-side, the different datasets used are shown: DQ (DelucionQA), EM (EManual), and HP (HotPotQA). The second column from the left-hand-side shows the different metrics used to evaluate the answers: CS (cosine similarity, which captures similarity in the embedding space between the generated response and a ground truth or "golden" response (i.e. a human-generated response)), Gnd (Groundedness which captures the hallucinations produced by the KG-RAG or RAG process), HE (human evaluation, which captures the usefulness of the KG-RAG or RAG response) and Rel (Relevance, which captures how appropriate the response is w.r.t to the original question).

The results in Figure 14 show that, generally, attacks (specifically, attacks based on the graph signature described above) tend to have a greater effect on KG-RAG processes than on normal RAG processes, highlighting the importance of the methodology disclosed herein of identifying adversarial perturbed KGs.

Whilst there are no conventional methods aimed at solving the problems solved by the methods proposed herein, the methods proposed herein may be compared with two existing LLM security methods which are described below as comparative methods. These are perplexity and rephrasing based defenses.

### Perplexity based

Concept: Perplexity is a measure of how well a probability model predicts a sample. In the context of language models, it indicates how surprised or confused the model is by a given text.

Application to LLM safety: The core idea is that unsafe or unwanted content often has different statistical properties compared to the typical, safe content the model was trained on. This difference can be detected through perplexity.

Implementation: A separate "safety model" is trained on a curated dataset of safe content. When the main LLM generates an output, the safety model calculates the perplexity of that output. If the perplexity exceeds a certain threshold, it suggests the content may be unsafe or atypical, and the output can be filtered or flagged for review.

### Limitations:

- May have false positives for unusual but safe content
- Requires careful tuning of thresholds
- May not catch all unsafe content, especially if it is statistically like safe content. It cannot detect e.g. adversarial KGs which are carefully human-generated.

### Rephrasing based

Concept: Rephrasing defenses reformulate user inputs before they reach the main LLM, preserving core meaning while disrupting potential attack patterns.

Application to LLM Safety: It mitigates prompt injection attacks, filters harmful content requests, reduces input-based biases and improves response consistency .

Implementation: A preprocessing AI model for rephrasing is developed and rule-based transformations are implemented, whilst ensuring intent preservation.

### Limitations:

- Potential semantic drift and loss of conversational context
- May constrain creative inputs
- Adds computational overhead

It will be appreciated that neither of the above-described comparative methods are particularly applicable for KGs in a KG-RAG system unlike in the disclosed methods. The disclosed methods do not suffer from the same limitations described above.

The methods disclosed herein address the vulnerabilities in Knowledge Graph Retrieval-Augmented Generation (KG-RAG) systems caused by adversarial or compromised knowledge graphs. Specifically, the disclosed methods provide a mechanism for detecting and flagging adversarial documents containing harmful or misleading information (which may lead to retrieval of harmful or misleading triples), which can negatively influence the output of large language models (LLMs).
- Adversarial Threats: There is no existing mechanism to identify or mitigate adversarial documents containing malicious information (which may lead to the retrieval of misleading triples), which can lead to irrelevant or harmful context being provided to LLMs, resulting in undesirable and potentially harmful responses.
- Reliability and Robustness: The absence of effective detection mechanisms for adversarial inputs reduces the reliability of KG-RAG systems in critical applications requiring accurate and trustworthy results.
- Diagnostic Capability: There is currently no systematic approach to formulating diagnostic questions to evaluate the effectiveness and limitations of KG-RAG systems, further hindering their robustness and deployment.

The methods disclosed herein enhance the security and robustness of Knowledge Graph Retrieval-Augmented Generation (KG-RAG) systems by detecting and mitigating adversarial manipulations. By computing the Graph Laplacian and analyzing eigenvalue gaps, the method captures subtle structural changes in the KG. Edge sensitivities are calculated to assess the impact of individual connections, and kernel mean embeddings compress this information into a compact representation. This graph signature enables an efficient classification mechanism to distinguish between adversarial and clean KG-RAG instances. As a result, the invention strengthens the reliability of KG-RAG systems, ensuring that generated responses are based on authentic and unaltered knowledge, thereby improving trustworthiness in AI-driven applications and preventing misinformation in Al-generated responses. This may also help to ensure medical KG-RAG systems are protected from adversarial modifications that could lead to incorrect diagnoses or treatments.

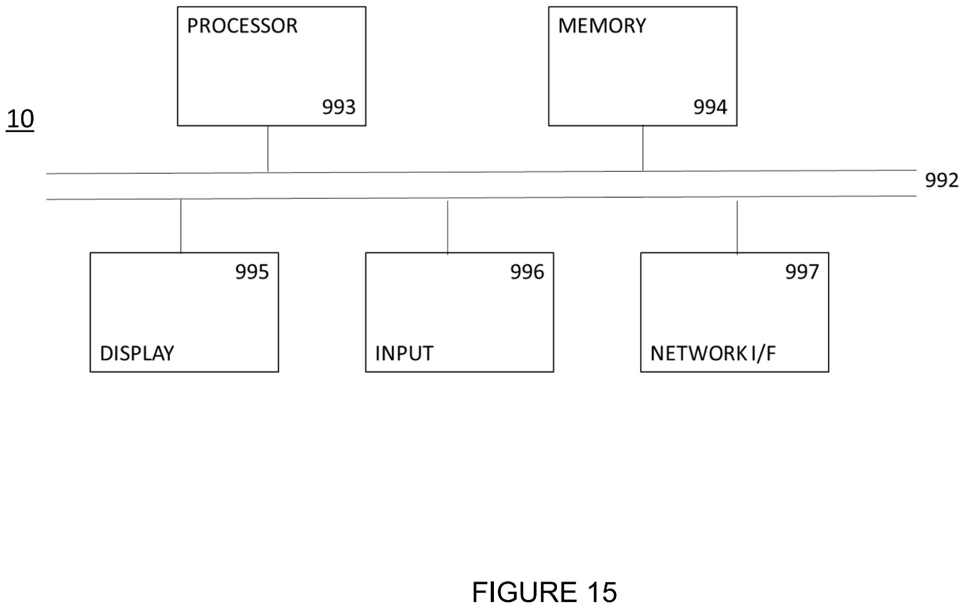

Figure 15 is a block diagram of an information processing apparatus 10 or a computing device 10, such as a data storage server, which embodies the present invention, and which may be used to implement some or all of the operations of a method embodying the present invention, and perform some or all of the tasks of apparatus of an embodiment. The computing device 10 may be used to implement any of the method steps described above, e.g. any of steps S12-S17, S21-S24, and S41-S50.

The computing device 10 comprises a processor 993 and memory 994. Optionally, the computing device also includes a network interface 997 for communication with other such computing devices, for example with other computing devices of invention embodiments. Optionally, the computing device also includes one or more input mechanisms such as keyboard and mouse 996, and a display unit such as one or more monitors 995. These elements may facilitate user interaction. The components are connectable to one another via a bus 992.

The memory 994 may include a computer readable medium, which term may refer to a single medium or multiple media (e.g., a centralized or distributed database and/or associated caches and servers) configured to carry computer-executable instructions. Computer-executable instructions may include, for example, instructions and data accessible by and causing a computer (e.g., one or more processors) to perform one or more functions or operations. For example, the computer-executable instructions may include those instructions for implementing a method disclosed herein, or any method steps disclosed herein, e.g. any of steps S12-S17, S21-S24, and S41-S50. Thus, the term "computer-readable storage medium" may also include any medium that is capable of storing, encoding or carrying a set of instructions for execution by the machine and that cause the machine to perform any one or more of the method steps of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing computer program code stored in the memory 994 to implement any of the method steps described herein. The memory 994 stores data being read and written by the processor 993 and may store graph signatures and/or KGs and/or queries and/or responses and/or a graph Laplacian and/or eigenvectors and/or eigenvalues and/or eigenvalue gaps and/or edge sensitivities and/or weights of the ML classifier and/or input data and/or other data, described above, and/or programs for executing any of the method steps described above. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and operations discussed herein. The processor 993 may be considered to comprise any of the modules described above. Any operations described as being implemented by a module may be implemented as a method by a computer and e.g. by the processor 993.

The display unit 995 may display a representation of data stored by the computing device, such as whether a KG is classified as adversarial or clean and/or a signature and/or GUI windows and/or interactive representations enabling a user to interact with the apparatus 10 by e.g. drag and drop or selection interaction, and/or any other output described above, and may also display a cursor and dialog boxes and screens enabling interaction between a user and the programs and data stored on the computing device. The input mechanisms 996 may enable a user to input data and instructions to the computing device, such as enabling a user to input any user input described above.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc may be included in the computing device.

Methods embodying the present invention may be carried out on a computing device/apparatus 10 such as that illustrated in Figure 15. Such a computing device need not have every component illustrated in Figure 15, and may be composed of a subset of those components. For example, the apparatus 10 may comprise the processor 993 and the memory 994 connected to the processor 993. Or the apparatus 10 may comprise the processor 993, the memory 994 connected to the processor 993, and the display 995. A method embodying the present invention may be carried out by a single computing device in communication with one or more data storage servers via a network. The computing device may be a data storage itself storing at least a portion of the data.

A method embodying the present invention may be carried out by a plurality of computing devices operating in cooperation with one another. One or more of the plurality of computing devices may be a data storage server storing at least a portion of the data.

The invention may be implemented in digital electronic circuitry, or in computer hardware, firmware, software, or in combinations of them. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention, e.g. any of steps S12-S17, S21-S24, and S41-S50 may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The above-described embodiments of the present invention may advantageously be used independently of any other of the embodiments or in any feasible combination with one or more others of the embodiments.

## Claims

1. A computer-implemented method comprising:
performing a signature generation process to generate a signature based on a target knowledge graph, KG, the signature generation process including
determining the target KG's graph Laplacian,
determining eigenvalues of the graph Laplacian,
determining gaps between the eigenvalues,
determining an importance score for each edge in the target KG based on the graph Laplacian, and
generating the signature as an array of values based on the gaps between the eigenvalues and the importance scores;
using a machine learning, ML, classifier, classifying, based on the signature, the target KG as adversarial or clean,
wherein the ML classifier has been trained according to a training process including:
obtaining a plurality of training KGs;
performing graph perturbations on a subset of the plurality of training KGs to generate adversarial training KGs and selecting the remaining training KGs as clean training KGs;
performing the signature generation process for the plurality of training KGs including the adversarial training KGs and the clean training KGs to generate a plurality of corresponding training signatures; and
training the ML classifier to correctly classify the training KGs as adversarial or clean based on the corresponding training signatures.

2. The computer-implemented method as claimed in claim 1, comprising:
receiving a query;
based on the query, retrieving information from at least one document;
generating the target KG based on the retrieved information;
when the target KG is classified as a clean KG, generating, based on the query and the target KG and using a large language model, LLM, a response to the query.

3. A computer-implemented method comprising performing a training process comprising:
obtaining a plurality of training knowledge graphs, KGs;
performing graph perturbations on a subset of the plurality of training KGs to generate adversarial training KGs and selecting the remaining training KGs as clean training KGs;
performing a signature generation process for the plurality of training KGs including the adversarial training KGs and the clean training KGs to generate a plurality of corresponding training signatures, wherein the signature generation process comprises, for each training KG
determining the training KG's graph Laplacian,
determining eigenvalues of the graph Laplacian,
determining gaps between the eigenvalues,
determining an importance score for each edge in the training KG based on the graph Laplacian, and
generating the signature as an array of values based on the gaps between the eigenvalues and the importance scores; and
training the ML classifier to correctly classify the training KGs as adversarial or clean based on the corresponding training signatures.

4. The computer-implemented method as claimed in claim 3, comprising:
performing the signature generation process to generate a signature based on a target KG; and
using the ML classifier, classifying, based on the signature, the target KG as adversarial or clean.

5. The computer-implemented method as claimed in any of claims 1 to 4, wherein determining the graph Laplacian comprises computing an adjacency matrix and a degree matrix based on the KG.

6. The computer-implemented method as claimed in claim 5, wherein computing the adjacency matrix comprises computing node embeddings of the nodes of the KG and computing relation embeddings of the edges of the KG.

7. The computer-implemented method as claimed in claim 6, wherein computing the adjacency matrix comprises computing each element of the KG which corresponds to a pair of connected nodes in the KG based on the node embeddings of the pair of nodes and the relation embedding of the edge between the pair of nodes.

8. The computer-implemented method as claimed in any of the preceding claims, wherein determining the importance scores comprises, for each edge:
removing the edge and determining modified eigenvalues based on the graph Laplacian; and
computing a difference between the eigenvalues and the modified eigenvalues.

9. The computer-implemented method as claimed in claim 8, wherein determining the modified eigenvalues based on the graph Laplacian comprises using first-order perturbation theory.

10. The computer-implemented method as claimed in any of the preceding claims, wherein generating the signature as the array of values comprises including in the array of values the eigenvalue gaps, a norm of the eigenvalue gaps, and the importance scores.

11. The computer-implemented method as claimed in claim 3, wherein performing the graph perturbations comprises performing the signature generation process to generate signatures for the subset of training KGs to be perturbed and determining which nodes and/or edges to perturb based on the signatures.

12. A computer program which, when run on a computer, causes the computer to carry out a method comprising:
performing a signature generation process to generate a signature based on a target knowledge graph, KG, the signature generation process including
determining the target KG's graph Laplacian,
determining eigenvalues of the graph Laplacian,
determining gaps between the eigenvalues,
determining an importance score for each edge in the target KG based on the graph Laplacian, and
generating the signature as an array of values based on the gaps between the eigenvalues and the importance scores;
using a machine learning, ML, classifier, classifying, based on the signature, the target KG as adversarial or clean,
wherein the ML classifier has been trained according to a training process including:
obtaining a plurality of training KGs;
performing graph perturbations on a subset of the plurality of training KGs to generate adversarial training KGs and selecting the remaining training KGs as clean training KGs;
performing the signature generation process for the plurality of training KGs including the adversarial training KGs and the clean training KGs to generate a plurality of corresponding training signatures; and
training the ML classifier to correctly classify the training KGs as adversarial or clean based on the corresponding training signatures.

13. A computer program which, when run on a computer, causes the computer to carry out a method comprising performing a training process comprising:
obtaining a plurality of training knowledge graphs, KGs;
performing graph perturbations on a subset of the plurality of training KGs to generate adversarial training KGs and selecting the remaining training KGs as clean training KGs;
performing a signature generation process for the plurality of training KGs including the adversarial training KGs and the clean training KGs to generate a plurality of corresponding training signatures, wherein the signature generation process comprises, for each training KG
determining the training KG's graph Laplacian,
determining eigenvalues of the graph Laplacian,
determining gaps between the eigenvalues,
determining an importance score for each edge in the training KG based on the graph Laplacian, and
generating the signature as an array of values based on the gaps between the eigenvalues and the importance scores; and
training the ML classifier to correctly classify the training KGs as adversarial or clean based on the corresponding training signatures.

14. An information processing apparatus comprising a memory and a processor connected to the memory, wherein the processor is configured to:
perform a signature generation process to generate a signature based on a target knowledge graph, KG, the signature generation process including
determining the target KG's graph Laplacian,
determining eigenvalues of the graph Laplacian,
determining gaps between the eigenvalues,
determining an importance score for each edge in the target KG based on the graph Laplacian, and
generating the signature as an array of values based on the gaps between the eigenvalues and the importance scores; and
using a machine learning, ML, classifier, classify, based on the signature, the target KG as adversarial or clean,
wherein the ML classifier has been trained according to a training process including:
obtaining a plurality of training KGs;
performing graph perturbations on a subset of the plurality of training KGs to generate adversarial training KGs and selecting the remaining training KGs as clean training KGs;
performing the signature generation process for the plurality of training KGs including the adversarial training KGs and the clean training KGs to generate a plurality of corresponding training signatures; and
training the ML classifier to correctly classify the training KGs as adversarial or clean based on the corresponding training signatures.

15. An information processing apparatus comprising a memory and a processor connected to the memory, wherein the processor is configured to perform a training process comprising:
obtaining a plurality of training knowledge graphs, KGs;
performing graph perturbations on a subset of the plurality of training KGs to generate adversarial training KGs and selecting the remaining training KGs as clean training KGs;
performing a signature generation process for the plurality of training KGs including the adversarial training KGs and the clean training KGs to generate a plurality of corresponding training signatures, wherein the signature generation process comprises, for each training KG
determining the training KG's graph Laplacian,
determining eigenvalues of the graph Laplacian,
determining gaps between the eigenvalues,
determining an importance score for each edge in the training KG based on the graph Laplacian, and
generating the signature as an array of values based on the gaps between the eigenvalues and the importance scores; and
training the ML classifier to correctly classify the training KGs as adversarial or clean based on the corresponding training signatures.
